# FASCICULE DE BREVET EUROPEEN

(11) **EP 3 344 855 B1**
(45) Date de publication et mention de la délivrance du brevet: **13.03.2019**
(21) Numéro de dépôt: 16775278.1
(22) Date de dépôt: 30.08.2016
(51) Int. Cl.: F01D 25/24, B64D 29/00, F02K 1/04

(54) **ENSEMBLE PROPULSIF MUNI DE PARTIES DE CARTER DECOUPLABLES**
ANTRIEBSANORDNUNG MIT ENTKOPPELBAREN GEHÄUSETEILEN
PROPULSION ASSEMBLY HAVING UNCOUPLABLE HOUSING PORTIONS

(30) Priorité: 04.09.2015 FR 1558212
(43) Date de publication de la demande: 11.07.2018
(73) Titulaire: Safran Aircraft Engines, 75015 Paris (FR)
(72) Inventeur: BECOULET, Julien, Fabien, Patrick, 77550 Moissy-Cramayel Cedex (FR); BORIES, Sylvain, 77550 Moissy-Cramayel Cedex (FR); TAN-KIM, Alexandre, Jean-Marie, 77550 Moissy-Cramayel Cedex (FR)
(74) Mandataire: Cabinet Beau de Loménie
(86) Numéro de dépôt international: PCT/FR2016/052146
(87) Numéro de publication internationale: WO 2017/037378

(56) Documents cités:
- EP-A2- 2 397 710
- FR-A1- 2 927 954
- US-A1- 2011 203 255

## Description

### DOMAINE DE L'INVENTION

Le présent exposé concerne un ensemble propulsif, incluant une turbomachine, dont certaines parties de carter peuvent être découplées afin d'atténuer certains modes de vibration de la turbomachine en cas d'avarie.

Un tel enseignement peut s'appliquer à tout type d'ensemble propulsif incluant une turbomachine ; il est toutefois particulièrement utile pour les turboréacteurs d'avion, notamment en prévision d'un risque d'ingestion d'oiseau.

### ETAT DE LA TECHNIQUE ANTERIEURE

Les ensembles propulsifs du type turboréacteur à double flux à fort taux de dilution possèdent des masses importantes situées en porte-à-faux par rapport à la suspension du moteur, que ce soit à l'avant ou à l'arrière du moteur. Certains éléments de la nacelle, tels la manche d'entrée d'air, la tuyère ou le cône d'échappement, représentent ainsi des masses importantes en porte-à-faux.

Ces masses en porte-à-faux génèrent ainsi un moment de flexion important sur le moteur. En cas de balourd de la soufflante, causé par le déplacement, la détérioration ou la perte d'aubes suite à une ingestion d'oiseau par exemple, certains modes de vibration sont amplifiés et entraînent dès lors des charges de dimensionnement élevées au niveau des brides de fixation des différentes parties de carter de l'ensemble propulsif, tout particulièrement au niveau des interfaces avec ces éléments en porte-à-faux.

En particulier, dans un tel cas d'avarie, l'ensemble propulsif doit être capable de résister à ces charges limites durant une durée minimale définie par les textes de certification, ce qui fatigue naturellement fortement les structures et nécessite donc un dimensionnement important.

Afin de réduire l'intensité de ces modes de vibration et donc l'importance des charges subies en cas de balourd soufflante, il a déjà été proposé de découpler certains éléments du rotor par rapport au stator. Ceci permet de modifier l'excitation générée par le rotor et donc d'atténuer certains modes de vibration de l'ensemble propulsif. Toutefois, découpler ainsi des portions du rotor entraîne une plus grande liberté de déplacement du rotor au sein du stator et donc un risque important d'endommagement étendu à l'ensemble de la turbomachine.

Le document US 2011/203255 décrit une partie de carter possédant une portion de fixation flexible.

Il existe donc un réel besoin pour un ensemble propulsif permettant de réduire certains modes de vibration de la turbomachine et qui soit dépourvu, au moins en partie, des inconvénients inhérents aux configurations connues précitées.

### PRESENTATION DE L'INVENTION

Le présent exposé concerne un ensemble propulsif incluant une turbomachine configurée pour être fixée à un aéronef par l'intermédiaire d'une suspension, comprenant au moins une première et une deuxième partie de carter s'étendant axialement l'une après l'autre, l'une desdites parties de carter étant située en porte-à-faux par rapport à ladite suspension, dans lequel la première partie de carter possède une première portion de fixation connectée de manière rigide au corps de la première partie de carter et une deuxième portion de fixation connectée de manière plus souple au corps de la première partie de carter, dans lequel la deuxième partie de carter est fixée de manière permanente à la deuxième portion de fixation de la première partie de carter et de manière libérable à la première portion de fixation de la première partie de carter.

Dans le présent exposé, les termes « axial », « radial », « tangentiel », « intérieur », « extérieur » et leurs dérivés sont définis par rapport à l'axe principal de la turbomachine ; on entend par « plan axial » un plan passant par l'axe principal de la turbomachine et par « plan radial » un plan perpendiculaire à cet axe principal ; enfin, les termes « amont » et « aval » sont définis par rapport à la circulation de l'air dans la turbomachine. De plus, l'expression « s'étendant axialement l'une après l'autre » n'entend pas se limiter à un sens privilégié dans la direction axiale : ainsi, la première partie de carter peut aussi bien se situer en amont ou en aval de la deuxième partie de carter.

En outre, dans le présent exposé, on entend définir les termes « souple » et « rigide » l'un par rapport à l'autre : ainsi, la connexion entre la deuxième portion de fixation et le corps de carter sera considérée comme souple au sens du présent exposé si elle présente une raideur en flexion inférieure à la connexion entre la première portion de fixation et le corps de carter, constituant la référence de raideur, quelle que soit sa raideur effective. De préférence toutefois, la raideur en flexion de la connexion « souple » est inférieure à 90%, de préférence encore à 80%, de la valeur de raideur en flexion de la connexion « rigide ».

De plus, dans le présent exposé, une pièce est considérée comme située en porte-à-faux par rapport à la suspension lorsqu'elle est située en amont du point de suspension le plus amont de la turbomachine ou en aval du point de suspension le plus aval de la turbomachine.

Enfin, dans le présent exposé, on entend opposer les termes « permanent » et « libérable » : une fixation sera ainsi considérée comme « libérable » si elle peut être défaite, rompue ou libérée au cours du fonctionnement de l'ensemble propulsif, soit sur commande, soit à la survenance d'une condition préétablie tel le dépassement d'un niveau de contrainte, par exemple dans des modes de fonctionnement d'urgence, notamment en cas d'avarie (la condition peut notamment être liée à la détection d'un balourd dans un ensemble rotatif dépassant un seuil prédéterminé) ; au contraire, une fixation sera considérée comme « permanente » au sens du présent exposé si elle n'est pas configurée pour être défaite au cours du fonctionnement de l'ensemble propulsif. La définition d'une fixation permanente se réfère donc au fonctionnement de l'ensemble propulsif et n'entend pas exclure la possibilité d'un démontage de la fixation en dehors du fonctionnement de l'ensemble propulsif, par exemple lors de sa maintenance. De plus, on considérera que la liaison est libérée si sa raideur chute de plus de 50% par rapport à l'état fixé : ainsi on considérera que la liaison est libérée même si un lien physique lâche persiste après la rupture de la liaison entre les deux pièces initialement fixées.

Dès lors, grâce à la configuration ainsi proposée, la deuxième partie de carter est fixée de manière rigide à la première partie de carter lors du fonctionnement normal de l'ensemble propulsif : la connexion est en effet réalisée à la fois par la première portion de fixation de la première partie de carter, via un chemin de connexion rigide, et par sa deuxième portion de fixation, via un chemin de connexion souple.

En revanche, en cas de besoin, par exemple lorsque le mode de vibration de la turbomachine atteint une valeur seuil entraînant des contraintes inacceptables, typiquement en cas d'apparition d'un balourd au niveau de la soufflante suite à l'ingestion d'un oiseau, la fixation reliant la deuxième partie de carter à la première portion de fixation de la première partie de carter peut être rompue de telle sorte que la deuxième partie de carter ne soit désormais fixée à la première partie de carter que par sa deuxième portion de fixation, donc via le chemin de connexion souple uniquement. Dès lors, ceci abaisse la raideur de la fixation entre les première et deuxième parties de carter, ce qui modifie la réponse dynamique du système et contribue ainsi à réduire la fréquence et l'intensité des modes de vibration de l'ensemble propulsif.

En conséquence, les contraintes subies par l'ensemble propulsif suite à une telle avarie sont réduites, ce qui lui permet de résister plus longtemps après l'avarie. Les tests de certification sont ainsi plus faciles à passer et, en conditions réelles, le pilote dispose ainsi de plus de temps pour poser l'avion avant un endommagement plus sévère du moteur.

De plus, à conditions de certification égales, les contraintes subies étant plus faibles, il est possible d'alléger les structures et donc de réduire la masse de l'ensemble propulsif et ainsi sa consommation.

Dans certains modes de réalisation, ladite partie de carter située en porte-à-faux par rapport à la suspension est située en porte-à-faux par rapport à une partie de carter directement connectée à la suspension.

Dans certains modes de réalisation, ladite partie de carter directement connectée à la suspension est l'autre desdites première et deuxième parties de carter.

Dans certains modes de réalisation, la turbomachine comprend un rotor et un stator, le rotor comprenant une soufflante entraînée par un arbre monté en rotation par rapport au stator par l'intermédiaire d'au moins deux paliers.

Dans certains modes de réalisation, le centre de gravité de ladite partie de carter située en porte-à-faux par rapport à la suspension est situé axialement plus en amont que le plus amont desdits paliers ou plus en aval que le plus aval desdits paliers.

Dans certains modes de réalisation, ladite partie de carter située en porte-à-faux par rapport à la suspension est située en porte-à-faux par rapport à un palier porté par une partie de carter directement connectée à la suspension.

Dans certains modes de réalisation, lesdites parties de carter sont annulaires et disposées autour de l'arbre de rotor de la turbomachine.

Dans certains modes de réalisation, la première portion de fixation de la première partie de carter est connectée au corps de la première partie de carter par l'intermédiaire d'une première portion de connexion et la deuxième portion de fixation de la première partie de carter est connectée au corps de la première partie de carter par l'intermédiaire d'une deuxième portion de connexion, et la deuxième portion de connexion possède une raideur en flexion au moins 10% moins importante que la première portion de connexion, de préférence au moins 20% moins importante.

Dans certains modes de réalisation, la deuxième portion de connexion est ajourée. Ceci est un moyen aisé et peu coûteux pour réduire la raideur de cette portion de connexion. Des trous peuvent notamment être réalisés dans la deuxième portion de connexion. Dans d'autres modes de réalisation, la deuxième portion de connexion peut être formée d'une série de plaques ou de colonnettes disjointes par exemple.

Dans certains modes de réalisation, la deuxième portion de connexion possède une épaisseur inférieure à la première portion de connexion.

Dans certains modes de réalisation, la deuxième portion de connexion est réalisée dans un matériau plus souple que la première portion de connexion.

Dans certains modes de réalisation, la première portion de connexion s'étend dans le prolongement du corps de la première partie de carter. Ceci permet d'assurer une bonne rigidité à la première portion de connexion.

Dans certains modes de réalisation, la deuxième portion de connexion s'étend de manière bifurquée depuis le corps de la première partie de carter. De cette manière, la portion de connexion souple peut s'étendre le long de la portion de connexion rigide afin de faciliter l'interface avec la deuxième partie de carter. En outre, cette bifurcation peut contribuer à fournir de la souplesse à la deuxième portion de connexion.

Dans certains modes de réalisation, la première portion de fixation de la première partie de carter est une première bride de fixation.

Dans certains modes de réalisation, la deuxième portion de fixation de la première partie de carter est une deuxième bride de fixation.

Dans certains modes de réalisation, la deuxième partie de carter est fixée aux première et deuxième portions de fixation de la première partie de carter par l'intermédiaire d'une même portion de fixation. Ceci augmente la compacité de l'interface entre les première et deuxième parties de carter.

Dans certains modes de réalisation, portion de fixation de la deuxième partie de carter est une bride de fixation.

Dans certains modes de réalisation, la fixation de la deuxième partie de carter à la première portion de fixation de la première partie de carter est indépendante de sa fixation à la deuxième portion de fixation de la première partie de carter. Ceci facilite la séparation effective de la deuxième partie de carter de la première portion de fixation de la première partie de carter lors de la libération de sa fixation.

Dans certains modes de réalisation, les première et deuxième brides de fixation de la première partie de carter sont festonnées. Cette configuration facilite la fixation indépendante des première et deuxième brides de fixation de la première partie de carter avec la même bride de fixation de la deuxième partie de carter. Ceci facilite également l'alternance des points de fixations avec la première bride d'une part et la deuxième bride d'autre part.

Dans certains modes de réalisation, la deuxième partie de carter est fixée de manière libérable à la première portion de fixation de la première partie de carter à l'aide de moyens de fixation fusibles. Il peut notamment s'agir de vis ou de boulons fusibles.

Dans certains modes de réalisation, les moyens de fixation fusibles sont configurés pour se rompre lorsqu'ils sont soumis à une contrainte dépassant une valeur seuil prédéterminée.

Dans d'autres modes de réalisation, les moyens de fixation fusibles sont configurés pour se rompre sur commande, par exemple à l'aide de boulons pyrotechniques.

Dans certains modes de réalisation, la deuxième partie de carter est fixée de manière permanente à la deuxième portion de fixation de la première partie de carter à l'aide de moyens de fixation conventionnels (non fusibles).

Dans certains modes de réalisation, l'ensemble propulsif inclut en outre une nacelle et l'une des première et deuxième parties de carter est une partie de carter de la turbomachine tandis que l'autre des parties de carter est une partie de carter de la nacelle. De préférence, la première partie de carter appartient à la turbomachine et porte l'un desdits paliers tandis que la deuxième partie de carter, en porte-à-faux, appartient à la nacelle. Ce sont souvent en effet des parties de carter de nacelle qui sont situées aux extrémités amont et aval de l'ensemble propulsif, donc fortement en porte-à-faux, et qui sont alors responsables d'un moment de flexion important.

Dans certains modes de réalisation, ladite partie de carter de nacelle est un cône d'échappement, également souvent appelé « plug ». Ladite partie de carter de turbomachine peut alors être le carter arrière de turbine également souvent appelé carter « TRV » (Turbine Rear Vane). Ce cône d'échappement possède en effet une masse importante et se situe à l'extrémité aval de la turbomachine.

Dans d'autres modes de réalisation, ladite partie de carter de nacelle est une tuyère, également souvent appelée « nozzle ». Ladite partie de carter de turbomachine peut alors être le carter arrière de turbine. Cette tuyère se situe en effet également à l'extrémité aval de la turbomachine, de manière concentrique autour du cône d'échappement.

Dans d'autres modes de réalisation, ladite partie de carter de nacelle est une manche d'entrée d'air, également souvent appelée « air inlet ». Ladite partie de carter de turbomachine peut alors être un carter de soufflante. Cette manche d'entrée d'air possède en effet une masse importante et se situe à l'extrémité amont de la turbomachine.

Les caractéristiques et avantages précités, ainsi que d'autres, apparaîtront à la lecture de la description détaillée qui suit, d'exemples de réalisation de l'ensemble propulsif proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est un plan en coupe d'un ensemble propulsif selon l'invention.
La FIG 2 est une vue en coupe de la zone d'interface entre le carter arrière de turbine et le cône d'échappement.
La FIG 3 est une vue agrandie du cadre III de la FIG 2.
La FIG 4 est une vue en plan des brides de fixation du carter arrière de turbine.
La FIG 5 est une vue en coupe selon le plan V-V de la FIG 4.
La FIG 6 est une vue en coupe selon le plan VI-VI de la FIG 4.
La FIG 7 est une vue en coupe de la zone d'interface entre le carter arrière de turbine et le cône d'échappement après rupture des moyens de fixation fusibles.
La FIG 8 est un graphe représentant l'évolution du moment en fonction du régime de rotation du moteur au niveau des brides entre le carter inter-turbines et le carter de turbine BP.

### DESCRIPTION DETAILLEE D'EXEMPLE(S) DE REALISATION

Afin de rendre plus concrète l'invention, un exemple d'ensemble propulsif est décrit en détail ci-après, en référence aux dessins annexés. Il est rappelé que l'invention ne se limite pas à cet exemple.

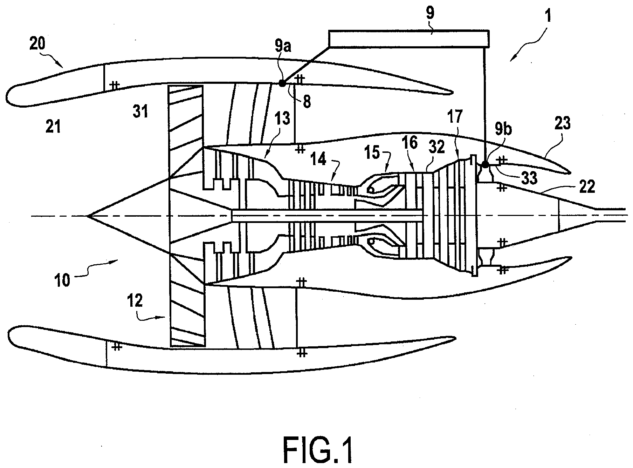

La FIG 1 représente, en coupe selon un plan vertical passant par son axe principal A, un ensemble propulsif 1 selon l'invention. Il comporte turboréacteur à double flux 10 et une nacelle 20 entourant le turboréacteur 10.

Le turboréacteur 10 comprend, d'amont en aval selon la circulation du flux d'air, une soufflante 12, un compresseur basse pression (BP) 13, un compresseur haute pression (HP) 14, une chambre de combustion 15, une turbine haute pression (HP) 16, et une turbine basse pression (BP) 17. Ces différents organes sont protégés par plusieurs parties de carter, globalement cylindriques, fixées les unes aux autres à l'aide de brides de fixation. Parmi ces différentes parties de carter, le turboréacteur 2 comprend un carter de soufflante 31, entourant la soufflante 12, un carter inter-turbines 32, s'étendant entre les turbines HP 16 et BP 17, et un carter arrière de turbine 33, s'étendant à l'arrière de la turbine BP 17 et comportant une virole interne 33a et une virole externe 33b.

La nacelle 20 comprend quant à elle différentes parties de carter permettant notamment de guider le flux d'air : parmi ces différentes parties de carter, elle comprend notamment une manche d'entrée d'air 21, montée en amont du carter de soufflante 31 et guidant le flux d'air à l'entrée de l'ensemble propulsif 1 vers la soufflante 12, un cône d'échappement 22, monté en aval de la virole interne du carter arrière de turbine 33 et délimitant l'enveloppe interne de la veine d'échappement de la circulation primaire du turboréacteur 10, et une tuyère 23, montée en aval de la virole externe du carter arrière de turbine 33 et séparant la veine d'échappement de la circulation primaire du turboréacteur 10 de la veine secondaire de dérivation.

Typiquement, le turboréacteur 10 est fixé à l'aéronef par une suspension 9 reliée en au moins deux points 9a, 9b du turboréacteur : la suspension est ainsi souvent connectée à l'amont au carter intermédiaire 8 et à l'aval du carter arrière de turbine 33 ou au carter inter-turbines 32.

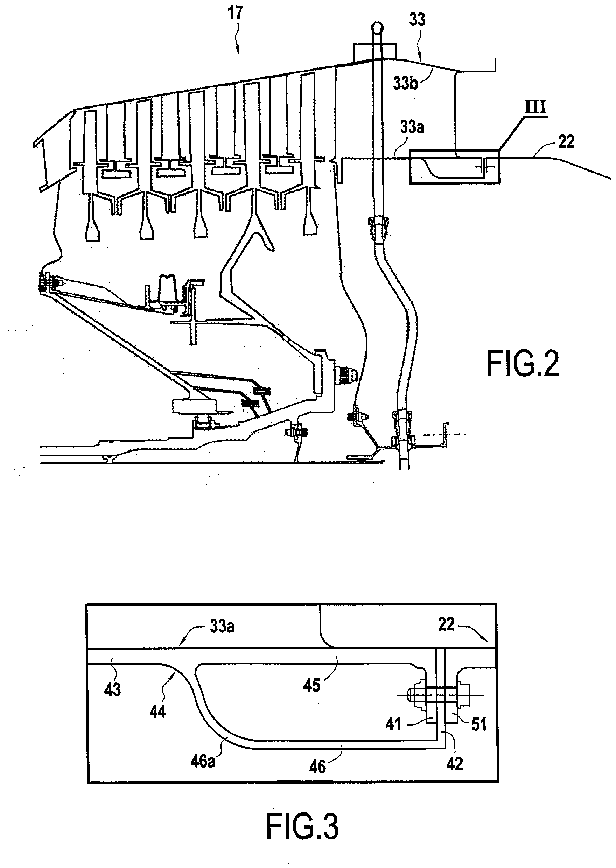

La FIG 2 illustre plus en détail la zone d'interface entre le carter arrière de turbine 33 et le cône d'échappement 22. A fins de simplification, la tuyère 23 a été omise sur cette figure.

Comme cela est mieux visible sur la FIG 3, la virole interne 33a du carter arrière de turbine 33 possède à son extrémité aval une première bride de fixation 41 et une deuxième bride de fixation 42. Plus précisément, le corps 43 de la virole interne 33a se prolonge d'une part rectilignement jusqu'à la première bride de fixation 41 marquant l'extrémité aval de la virole interne 33a ; d'autre part, la deuxième bride de fixation 42 est connectée au corps 43 par l'intermédiaire d'une couronne 46 rapportée sur la surface interne du corps de carter 43 ou dérivée de ce dernier.

Ainsi, en quelque sorte, en progressant d'amont vers l'aval, le corps de carter 43 atteint une bifurcation 44 conduisant d'une part à la première bride de fixation 41 via une première portion de connexion 45, constituée en réalité par le prolongement rectiligne du corps de carter 43, et à la deuxième bride de fixation 42 via une deuxième portion de connexion 46 constituée par la couronne.

Dans cet exemple, la deuxième portion de connexion 46 possède une épaisseur inférieure à celle du corps de carter 43 et donc à celle de la première portion de connexion 45. Dès lors, la deuxième portion de connexion 46 possède une raideur en flexion inférieure à celle de la première portion de connexion 45. La deuxième portion de connexion 46 possède de plus une portion arrondie 46a qui contribue également à réduire sa raideur.

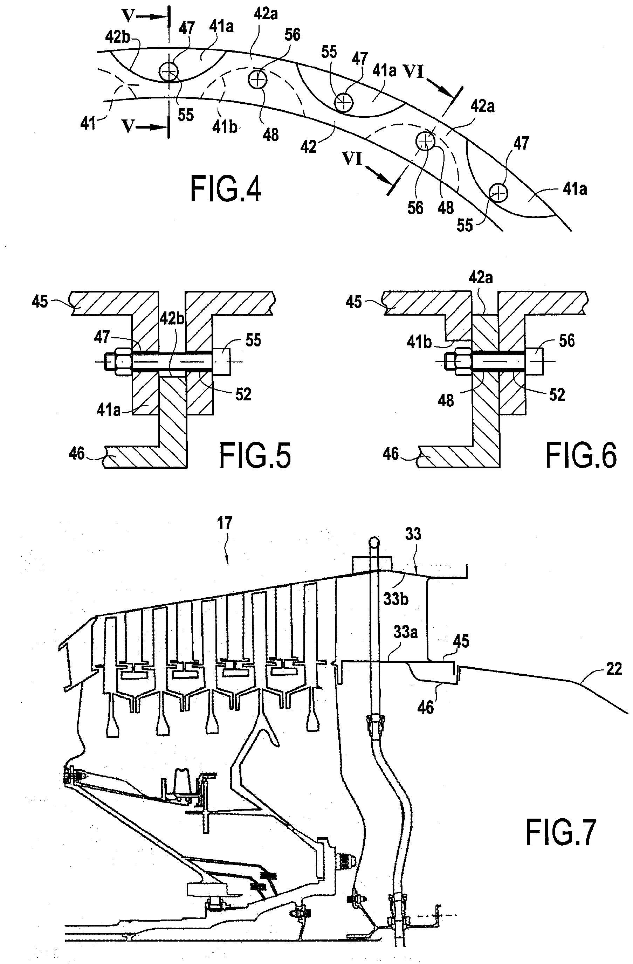

Le cône d'échappement 22 est muni quant à lui à son extrémité amont d'une unique bride de fixation 51 fixée simultanément mais de manière indépendante aux première et deuxième brides de fixation 41, 42 de la virole interne 33a du carter arrière de turbine 33 : ces fixations vont maintenant être décrites plus en détail en référence aux FIG 4, 5 et 6.

Comme cela est visible sur la FIG 4, les première et deuxième brides de fixation 41, 42 du carter arrière de turbine 33 sont festonnées, c'est-à-dire qu'elles présentent circonférentiellement une succession d'oreilles 41a, 42a s'étendant radialement de manière disjointe à la manière de festons. Chaque oreille 42a de la deuxième bride 42 est ainsi séparée de sa voisine par un retrait 42b au niveau duquel peut se placer une oreille 41a de la première bride ; de la même manière, chaque oreille 41a de la première bride 41 est séparée de sa voisine par un retrait 41b coïncident avec une oreille 42a de la deuxième bride 42. Chaque oreille 41a, 42a est munie d'au moins un alésage 47, 48.

La bride 51 du cône d'échappement 22 est quant à elle une bride conventionnelle s'étendant radialement continument tout le long de la périphérie amont du cône d'échappement 22. Elle est munie d'alésages 52 coïncidents avec les alésages 47, 48 des oreilles 41a, 42a.

Comme cela est visible sur les FIG 5 et 6, il est alors possible de fixer la bride de fixation 51 du cône d'échappement 22 de manière indépendante sur la première bride de fixation 41 du carter 33 à l'aide de moyens de fixation d'un première type 55 et sur la deuxième bride de fixation 42 du carter 33 à l'aide de moyens de fixation d'un deuxième type 56.

Les premiers moyens de fixation 55 ont la particularité d'être fusibles, c'est-à-dire qu'ils se rompent lorsqu'ils subissent une contrainte dépassant un certain seuil. A l'inverse, les deuxièmes moyens de fixation 56 ne sont pas fusibles et ne peuvent pas rompre ou se défaire au cours du fonctionnement de l'ensemble propulsif.

Dans le présent exemple, les deuxièmes moyens de fixation sont des boulons conventionnels 56 tandis que les premiers moyens de fixation sont des boulons fusibles 55 possédant un tronçon d'épaisseur réduite capable de se rompre lorsque le moment sur les brides 41, 51 dépasse un seuil prédéterminé, par exemple un seuil compris entre 10 et 50 10³N.m pour un turboréacteur double corps à double flux.

Ainsi, en cas d'apparition d'un moment inhabituel s'exerçant sur l'interface entre le carter arrière de turbine 33 et le cône d'échappement 22, excité par exemple par un balourd de la soufflante 12 causé par l'ingestion d'un oiseau, les boulons fusibles 55 se rompent de telle sorte que le cône d'échappement 22 ne reste alors fixé au carter arrière de turbine 33 que par la deuxième bride de fixation 42. La connexion du cône d'échappement 22 au corps 43 du carter arrière de turbine 33, et donc au reste de l'ensemble propulsif 1, s'effectue dès lors exclusivement via le chemin d'effort souple de la deuxième portion de connexion 46 : comme cela est visible sur la FIG 7, la plus faible raideur de cette liaison offre alors au cône d'échappement 22 une plus grande liberté de mouvement. En outre, cette diminution de raideur modifie la réponse dynamique du système et, en particulier, entraîne le décalage et l'atténuation des modes de vibration de l'ensemble propulsif.

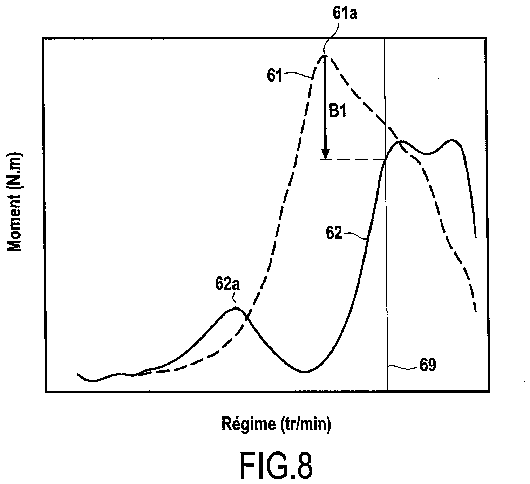

La FIG 8 illustre ce phénomène en représentant le graphe du moment s'exerçant au niveau des brides formant interface entre le carter inter-turbines 32 et le carter de la turbine BP 17 en fonction du régime moteur en cas de balourd limite dans la soufflante 12 (la valeur de ce balourd limite est défini par les textes de certification).

Les courbes en traits discontinus 61, 71 correspondent à la situation dans laquelle le cône d'échappement 22 reste fixé rigidement au carter arrière de turbine 33, c'est-à-dire en l'absence de la fixation libérable offerte par les boulons fusibles 55. Les courbes en traits continus 62, 72 correspondent en revanche à la situation après rupture des boulons fusibles 55 et donc après le découplage du cône d'échappement 22 par rapport au chemin d'effort rigide 45 du carter arrière de turbine 33. La ligne verticale 69 définit quant à elle la limite supérieure de la plage de fonctionnement normal du moteur. Les tests de certification doivent être effectués à un tel régime limite.

On constate dès lors sur la FIG 8 qu'en l'absence du découplage selon la présente invention le moment à l'interface entre le carter inter-turbines 32 et le carter de la turbine BP 17 présente un pic important 61a dans la plage de fonctionnement du moteur. En revanche, après découplage, ce mode 62a est décalé à plus basse fréquence et, surtout, présente une intensité bien plus faible. On constate également une baisse importante B1 d'environ 30% du moment maximal survenant dans la plage de fonctionnement du moteur, ce qui permet d'alléger les structures de la turbomachine, notamment de réduire les épaisseurs des carters, de réduire le nombre de vis de fixation utilisées, ou encore de changer de matériaux.

Dans le présent exposé, il a été choisi de décrire en détail l'exemple de l'interface entre le carter de turbine arrière 33 et le cône d'échappement 22. Toutefois, il faut noter que des gains sensibles peuvent également être obtenus et mettant en place une telle configuration entre d'autres couples de parties de carter de la turbomachine et/ou de la nacelle. Ainsi, par exemple, il est possible de mettre en place une configuration analogue à l'interface entre la virole externe 33b du carter arrière de turbine 33 et la tuyère 23, ou encore entre la manche d'entrée d'air 21 et le carter de soufflante 31, pour ne citer que ces exemples.

En tout état de cause, les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Ensemble propulsif incluant une turbomachine configurée pour être fixée à un aéronef par l'intermédiaire d'une suspension, comprenant au moins une première et une deuxième partie de carter (33, 22) s'étendant axialement l'une après l'autre,
l'une desdites parties de carter étant située en porte-à-faux par rapport à ladite suspension,
dans lequel la première partie de carter (33) possède une première portion de fixation (41) connectée de manière rigide au corps (43) de la première partie de carter (33) et une deuxième portion de fixation (42) connectée de manière plus souple au corps (43) de la première partie de carter (33), et
dans lequel la deuxième partie de carter (22) est fixée de manière permanente, au cours du fonctionnement de l'ensemble propulsif, à la deuxième portion de fixation (42) de la première partie de carter (33) et de manière libérable à la première portion de fixation (41) de la première partie de carter (33).

2. Ensemble propulsif selon la revendication 1, dans lequel ladite partie de carter située en porte-à-faux par rapport à la suspension est située en porte-à-faux par rapport à une partie de carter directement connectée à la suspension.

3. Ensemble propulsif selon la revendication 2, dans lequel ladite partie de carter directement connectée à la suspension est l'autre desdites première et deuxième parties de carter.

4. Ensemble propulsif selon l'une quelconque des revendications 1 à 3, dans lequel la turbomachine comprend un rotor et un stator, le rotor comprenant une soufflante entraînée par un arbre monté en rotation par rapport au stator par l'intermédiaire d'au moins deux paliers, et
dans lequel le centre de gravité de ladite partie de carter située en porte-à-faux par rapport à la suspension est situé axialement plus en amont que le plus amont desdits paliers ou plus en aval que le plus aval desdits paliers.

5. Ensemble propulsif selon l'une quelconque des revendications 1 à 4, dans lequel la première portion de fixation (41) de la première partie de carter (33) est connectée au corps (43) de la première partie de carter (33) par l'intermédiaire d'une première portion de connexion (45) et la deuxième portion de fixation (42) de la première partie de carter (33) est connectée au corps (43) de la première partie de carter (33) par l'intermédiaire d'une deuxième portion de connexion (46), et
dans lequel la deuxième portion de connexion (46) possède une raideur en flexion au moins 10% moins importante que la première portion de connexion (45).

6. Ensemble propulsif selon l'une quelconque des revendications 1 à 5, dans lequel la première portion de fixation de la première partie de carter (33) est une première bride de fixation (41),
dans lequel la deuxième portion de fixation de la première partie de carter (33) est une deuxième bride de fixation (42), et
dans lequel la deuxième partie de carter (22) est fixée aux première et deuxième portions de fixation (41, 42) de la première partie de carter (33) par l'intermédiaire d'une même bride de fixation (51).

7. Ensemble propulsif selon la revendication 6, dans lequel les première et deuxième brides de fixation (41, 42) de la première partie de carter (33) sont festonnées.

8. Ensemble propulsif selon l'une quelconque des revendications 1 à 7, dans lequel la deuxième partie de carter (22) est fixée de manière libérable à la première portion de fixation (41) de la première partie de carter (33) à l'aide de moyens de fixation fusibles (55).

9. Ensemble propulsif selon l'une quelconque des revendications 1 à 8, incluant en outre une nacelle (20), dans lequel l'une desdites première et deuxième parties de carter (33) est une partie de carter de la turbomachine (10) tandis que l'autre des parties de carter (22) est une partie de carter de la nacelle (20).

10. Ensemble propulsif selon la revendication 9, dans lequel ladite partie de carter de nacelle est un cône d'échappement (22), une tuyère (23) ou une manche d'entrée d'air (21).

## Patentansprüche

1. Antriebseinheit, welche eine Turbomaschine enthält, die dazu ausgelegt ist, mittels einer Aufhängung an einem Luftfahrzeug befestigt zu werden, umfassend wenigstens einen ersten und einen zweiten Gehäuseteil (33, 22), die sich axial nacheinander erstrecken,
wobei einer der Gehäuseteile bezüglich der Aufhängung auskragend angeordnet ist,
wobei der erste Gehäuseteil (33) einen ersten Befestigungsabschnitt (41), der mit dem Körper (43) des ersten Gehäuseteils (33) starr verbunden ist, sowie einen zweiten Befestigungsabschnitt (42) besitzt, der mit dem Körper (43) des ersten Gehäuseteils (33) flexibler verbunden ist, und
wobei der zweite Gehäuseteil (22) während des Betriebs der Antriebseinheit dauerhaft an dem zweiten Befestigungsabschnitt (42) des ersten Gehäusteteils (33) und freigebbar an dem ersten Befestigungsabschnitt (41) des ersten Gehäuseteils (33) befestigt ist.

2. Antriebseinheit nach Anspruch 1, bei der der Gehäuseteil, welcher bezüglich der Aufhängung auskragend angeordnet ist, bezüglich eines direkt mit der Aufhängung verbundenen Gehäuseteils auskragend angeordnet ist.

3. Antriebseinheit nach Anspruch 2, bei der der Gehäuseteil, welcher direkt mit der Aufhängung verbunden ist, der andere des ersten und zweiten Gehäuseteils ist.

4. Antriebseinheit nach einem der Ansprüche 1 bis 3, bei der die Turbomaschine einen Rotor und einen Stator umfasst, wobei der Rotor ein Gebläse umfasst, das über eine Welle angetrieben wird, die gegenüber dem Stator mittels wenigstens zweier Lager drehbar gelagert ist, und
bei der der Schwerpunkt des Gehäuseteils, welcher bezüglich der Aufhängung auskragend angeordnet ist, axial weiter stromaufwärts als das am weitesten stromaufwärts gelegene der Lager oder weiter stromabwärts als das am weitesten stromabwärts gelegene der Lager angeordnet ist.

5. Antriebseinheit nach einem der Ansprüche 1 bis 4, bei der der erste Befestigungsabschnitt (41) des ersten Gehäuseteils (33) mit dem Körper (43) des ersten Gehäuseteils (33) über einen ersten Verbindungsabschnitt (45) verbunden ist und der zweite Befestigungsabschnitt (42) des ersten Gehäuseteils (33) mit dem Körper (43) des ersten Gehäuseteils (33) über einen zweiten Verbindungsabschnitt (46) verbunden ist, und
bei der der zweite Verbindungsabschnitt (46) eine um wenigstens 10 % geringere Biegesteifigkeit als der erste Verbindungsabschnitt (45) aufweist.

6. Antriebseinheit nach einem der Ansprüche 1 bis 5, bei der der erste Befestigungsabschnitt des ersten Gehäuseteils (33) ein erster Befestigungsflansch (41) ist,
bei der der zweite Befestigungsabschnitt des ersten Gehäuseteils (33) ein zweiter Befestigungsflansch (42) ist, und
bei der der zweite Gehäuseteil (22) an den ersten und zweiten Befestigungsabschnitten (41, 42) des ersten Gehäuseteils (33) über einen gleichen Befestigungsflansch (51) befestigt ist.

7. Antriebseinheit nach Anspruch 6, bei der der erste und der zweite Befestigungsflansch (41, 42) des ersten Gehäuseteils (33) girlandenartig ausgebildet sind.

8. Antriebseinheit nach einem der Ansprüche 1 bis 7, bei der der zweite Gehäuseteil (22) mit Hilfe von Sollbruch-Befestigungsmitteln (55) an dem ersten Befestigungsabschnitt (41) des ersten Gehäuseteils (33) freigebbar befestigt ist.

9. Antriebseinheit nach einem der Ansprüche 1 bis 8, ferner umfassend eine Gondel (20), wobei einer der ersten und zweiten Gehäuseteile (33) ein Gehäuseteil der Turbomaschine (10) ist, während der andere der Gehäuseteile (22) ein Gehäuseteil der Gondel (20) ist.

10. Antriebseinheit nach Anspruch 9, bei der der Gondelgehäuseteil ein Auslasskegel (22), eine Düse (23) oder ein Lufteintrittskanal (21) ist.

## Claims

1. A propulsive assembly including a turbine engine configured to be fastened to an aircraft by means of a suspension, the assembly comprising at least first and second casing portions (33, 22) extending axially one after another:
one of said casing portions being cantilevered out relative to said suspension;
wherein a first casing portion (33) possesses a first fastener portion (41) connected rigidly to the body (43) of the first casing portion (33) and a second fastener portion (42) connected more flexibly to the body (43) of the first casing portion (33); and
wherein the second casing portion (22) is fastened to the second fastener portion (42) of the first casing portion (33) in a manner that is permanent during operation of the propulsive assembly, and to the first fastener portion (41) of the first casing portion (33) in a manner that is releasable.

2. A propulsive assembly according to claim 1, wherein said casing portion that is cantilevered to relative to the suspension is cantilevered out relative to a casing portion that is directly connected to the suspension.

3. A propulsive assembly according to claim 2, wherein said casing portion that is directly connected to the suspension is the other one of said first and second casing portions.

4. A propulsive assembly according to any one of claims 1 to 3, wherein the turbine engine comprises a rotor and a stator, the rotor including a fan driven by a shaft mounted to rotate relative to the stator via at least two bearings, and
wherein the center of gravity of said casing portion that is cantilevered out relative to the suspension is situated axially further upstream than the most upstream of said bearings or further downstream than the most downstream of said bearings.

5. A propulsive assembly according to any one of claims 1 to 4, wherein the first fastener portion (41) of the first casing portion (33) is connected to the body (43) of the first casing portion (33) by means of a first connection portion (45), and the second fastener portion (42) of the first casing portion (33) is connected to the body (43) of the first casing portion (33) by means of a second connection portion (46); and
wherein the second connection portion (46) possesses bending stiffness that is at least 10% less than the bending stiffness of the first connection portion (45).

6. A propulsive assembly according to any one of claims 1 to 5, wherein the first fastener portion of the first casing portion (33) is a first fastener flange (41);
wherein the second fastener portion of the first casing portion (33) is a second fastener flange (42); and
wherein the second casing portion (22) is fastened to the first and second fastener portions (41, 42) of the first casing portion (33) by means of a common fastener flange (51).

7. A propulsive assembly according to claim 6, wherein the first and second fastener portions (41, 42) of the first casing portion (33) are festooned.

8. A propulsive assembly according to any one of claims 1 to 7, wherein the second casing portion (22) is fastened in releasable manner to the first fastener portion (41) of the first casing portion (33) by using breakable fastener means (55).

9. A propulsive assembly according to any one of claims 1 to 8, further including a nacelle (20), wherein one of said first and second casing portions (33) is a casing portion of the turbine engine (10), while the other one of the casing portions (22) is a casing portion of the nacelle (20).

10. A propulsive assembly according to claim 9, wherein said casing portion of the nacelle is an exhaust cone (22), a nozzle (23), or an air intake duct (21).
